# FASCICULE DE BREVET EUROPEEN

(11) **EP 1 303 886 B1**
(45) Date de publication et mention de la délivrance du brevet: **08.06.2011**
(21) Numéro de dépôt: 01958158.6
(22) Date de dépôt: 23.07.2001
(51) Int. Cl.: H01M 8/02, H01M 4/96, H01B 1/24

(54) **ÉLECTRODE POUR PILE À COMBUSTIBLE UTILISANT UN MATÉRIAU COMPOSITE CONDUCTEUR**
BRENNSTOFFZELLENELEKTRODE VERWENDEND LEITFÄHIGES VERBUNDMATERIAL
FUEL CELL ELECTRODE USING CONDUCTIVE COMPOSITE MATERIAL

(30) Priorité: 24.07.2000 FR 0009667
(43) Date de publication de la demande: 23.04.2003
(73) Titulaire: Commissariat à l'Énergie Atomique et aux Énergies Alternatives, 75015 Paris (FR)
(72) Inventeur: JOUSSE, Franck, F-37000 Tours (FR); SALAS, Jean-Felix, F-37250 Montbazon (FR); MARSACQ, Didier, F-38000 Grenoble (FR); MAZABRAUD, Philippe, F-45000 Orleans (FR)
(74) Mandataire: Ilgart, Jean-Christophe
(86) Numéro de dépôt international: PCT/FR2001/002393
(87) Numéro de publication internationale: WO 2002/009220

(56) Documents cités:
- EP-A- 0 268 397
- EP-A- 0 415 733
- EP-A- 0 774 337
- EP-A- 0 784 352
- EP-A- 0 805 463
- EP-A- 0 935 303
- EP-A- 1 011 164
- EP-A- 1 059 348
- WO-A-00/25372
- WO-A-00/30202
- GB-A- 928 351
- US-A- 4 366 205
- US-A- 4 414 142
- US-A- 4 704 231

## Description

### Domaine technique

La présente invention concerne un matériau composite conducteur et son procédé de fabrication. Elle concerne aussi une électrode pour pile à combustible et un procédé de fabrication d'une telle électrode.

### Etat de la technique antérieure

Les matériaux composites électriquement conducteurs sont constitués de particules conductrices dispersées dans une matrice organique. Le seuil de conduction électrique, ou seuil de percolation (transition de l'état isolant à l'état conducteur), est atteint lorsque les particules conductrices forment un réseau de chemins conducteurs connectés sur tout le volume du matériau composite.

Les particules conductrices peuvent être métalliques, ce qui présente l'avantage d'une bonne conductivité électrique. Elles ont cependant l'inconvénient de posséder une densité élevée et d'être sensibles à l'environnement chimique de la pile. Les particules conductrices non métalliques sont particulièrement intéressantes pour leur faible densité et pour leur résistance chimique. Les charges conductrices non métalliques les plus utilisées sont les produits pulvérulents à base de carbone, tels que les poudres de noir de carbone ou de graphite et les fibres de carbone.

Suivant la morphologie des particules (rapport de forme, surface spécifique), le seuil de percolation est atteint pour des taux de charges de quelques % volumique pour des fibres et de 20% à 30% volumique pour des sphères. Ces charges permettent typiquement d'obtenir des conductivités dans le volume du matériau de l'ordre de 10⁻⁵ à 10⁻¹ S/cm. On constate ainsi que la conductivité des matériaux composites est très inférieure à celle des charges utilisées (de l'ordre de 1000 S/cm pour le graphite) bien que les taux de charges soient supérieurs au seuil de percolation. Cet effet s'explique par les importantes résistances de contact entre particules adjacentes. Ces résistances sont liées d'une part à la faible surface de contact entre deux particules (résistance de constriction) et, d'autre part, à la formation d'un film isolant à la surface des charges lors de leur dispersion dans le liant organique (résistance tunnel).

La résistance de constriction est définie par la relation R_{cr}= pi/d où ρᵢ représente la résistivité de la charge et d le diamètre de la surface de contact entre les grains. La surface de recouvrement des charges est contrôlée par leur géométrie ainsi que par leurs propriétés viscoélastiques, c'est-à-dire leur aptitude à se déformer sous contrainte.

La résistance tunnel est associée à tout film isolant pouvant recouvrir la surface des particules. Il peut s'agir de tensio-actifs adsorbés ou plus simplement de la matrice organique qui enrobe les charges une fois qu'elles y sont dispersées. Dans cette configuration, le mécanisme de conduction entre grains conducteurs n'est plus ohmique mais s'effectue par sauts électroniques entre particules isolées. En raison des faibles propriétés de transport électronique des polymères, le champ électrique local entre grains conducteurs nécessaire pour parvenir à la circulation d'un courant électrique dans la totalité des amas conducteurs constitués par les charges doit être très important. Pratiquement, le champ électrique local n'est jamais suffisant pour permettre un saut électronique entre chaque particule connectée mais isolée par un film de polymère. Seule une faible partie des chemins conducteurs est sollicitée et participe réellement à la circulation du courant. La conductivité macroscopique est fortement réduite. La résistance tunnel est définie par la relation Rₜ=ρₜ/a où ρₜ représente la résistivité tunnel, liée à l'épaisseur du film et aux propriétés électriques de la matrice organique isolante, et où a quantifie l'aire de contact.

La résistance à l'interface entre deux particules est la somme des résistances de constriction et tunnel. Dans la grande majorité des cas, la résistance tunnel gouverne la conductivité macroscopique des milieux hétérogènes. En effet, la résistance tunnel passe de 10⁻⁸ à 10³ Q . cm lorsque l'épaisseur du film isolant recouvrant les particules conductrices en contact varie de 0,5 à 12 nm. Cette épaisseur d'isolation de quelques nanomètres correspond classiquement à la couche de matrice polymérique adsorbée à la surface des charges lors de la dispersion.

Les piles à combustible à membrane polymère actuellement développées font appel à des plaques séparatrices de type bipolaire. Dans un assemblage complet constitué d'une succession de cellules électrochimiques, ces plaques bipolaires ont pour fonction de séparer les électrodes anodiques et cathodiques, de permettre la distribution des gaz hydrogène et oxygène, respectivement à la cathode et à l'anode, de collecter le courant électrique produit et dans certains cas de permettre le refroidissement de la cellule.

Les matériaux constituant ces plaques séparatrices bipolaires doivent satisfaire les critères suivants :
- fortes conductivités surfacique et volumique, au moins supérieures à 10 S/cm,
- imperméabilité aux gaz hydrogène et oxygène,
- résistance mécanique élevée,
- résistance chimique dans l'environnement acide de la cellule électrochimique, une éventuelle dégradation des matériaux de plaque bipolaire ne devant pas entraîner de pollution de la cellule électrochimique.

Ces matériaux doivent être mis en forme pour constituer des plaques à la surface desquelles sont réalisés des canaux de distribution de gaz. Les techniques de mise en oeuvre et les coûts des plaques bipolaires doivent rester compatibles avec les contraintes de la production automobile.

Actuellement, les plaques bipolaires sont réalisées à partir de plaques de graphite usinées ou de plaques de métal embouties et non corrodables (acier inoxydable ou aluminium recouvert de titane). Les solutions mettant en oeuvre du graphite usiné s'avèrent coûteuses et difficilement compatibles avec une production en grande série. Les solutions mettant en oeuvre des particules métalliques conduisent à des plaques relativement lourdes.

Une voie d'amélioration est la réalisation de plaques séparatrices bipolaires directement par moulage de composite conducteurs.

Les principes généraux exposés ci-dessus suggèrent que la réalisation de matériaux composites très conducteurs nécessite de mettre en oeuvre, par les techniques classiques de transformation des polymères, des matériaux très chargés en éléments conducteurs afin, d'une part, d'augmenter le nombre de contacts entre particules conductrices et, d'autre part, d'augmenter les surfaces de contact entre éléments adjacents.

Ces principes ont été repris dans le cadre du développement d'éléments de poids réduit pour pile à combustible et ont notamment abouti au dépôt des demandes de brevets EP-A-0 774 337, WO-A-96/12309, EP-A-0 933 825 et WO-A-98/53514.

La demande EP-A-0 774 337 divulgue un procédé de fabrication de corps moulés par extrusion de matière plastique chargée à plus de 50% en volume (de préférence entre 65 et 90%) en éléments conducteurs (graphite lamellaire ou non, fibres conductrices...). Au départ, le mélange des constituants est réalisé dans un malaxeur puis, après avoir été broyé et concassé, le mélange est extrudé sous forme de plaque ou de tube. Les matériaux composites obtenus sont réalisés à partir de tout type de charges conductrices disponibles dans le commerce.

Le document WO-A-96/12309 divulgue la réalisation d'un empilement pour pile à combustible, utilisant un matériau composite conducteur obtenu par mélange thermo-compressé de graphite lamellaire et de résine fluoré (PTFE). Le matériau composite obtenu par ce procédé est non poreux et directement moulable par compression. La structure du matériau composite conducteur et la nature des charges ne sont pas optimisées pour maîtriser l'imperméabilité aux gaz ainsi que le refroidissement de la cellule. Il est nécessaire de déposer un matériau barrière en surface pour étanchéiser l'ensemble.

Le document EP-A-0 933 825 divulgue un procédé de fabrication de plaques réparatrices pour pile à combustible à base d'un liant thermodurcissable (résine phénolique et époxyde) chargé en graphite lamellaire ou non. Le mélange est thermo-compressé dans un moule à la géométrie des plaques séparatrices à réaliser. La porosité, et donc en première approximation l'imperméabilité aux gaz, est optimisée en favorisant l'évacuation de l'eau et des gaz formés lors de la réticulation. Toutefois, une couche isolante de résine recouvre la surface des plaques et doit être éliminée par décapage.

Le document WO-A-98/53514 divulgue un procédé de fabrication par thermo-compression de plaques séparatrices bipolaires contenant de 50 à 95% de charges conductrices dans différents thermoplastiques. Les charges conductrices peuvent être du graphite, du noir de carbone et des fibres de carbone. Le problème de l'imperméabilité aux gaz est contourné par l'ajout d'un agent hydrophile favorisant la migration d'eau dans les pores du matériau. Cette configuration favorise surtout l'évacuation de l'eau produite dans la pile et permet le refroidissement de la cellule.

Le document EP-A-0 935 303 divulgue des séparateurs bipolaires comprenant approximativement 50 à 80 % en volume de graphite lamellaire, préférablement d'une taille de particules comprise entre 1 et 80 µm, sans fibres conductrices, le reste étant un liant organique. La taille moyenne des particules de graphite donnée dans les exemples est de 50 µm et de 30 µm.

Le document EP-A-0 805 463 divulgue un matériau composite conducteur ayant une anistropie planaire grâce à la présence de particules de graphite orientées de sorte que leurs plans principaux soient parallèles entre eux. Ce matériau composite comprend entre 40 et 95 % en volume de particules de graphite lamellaire ayant un rapport longueur sur hauteur d'au moins 5:1, sans fibres conductrices, le reste étant une matière thermoplastique. L'orientation des particules de graphite est réalisée en appliquant une pression de 1400 psi (environ 96 kg/cm²) pendant le moulage.

Le document WO 00/30202 décrit la fabrication de plaques bipolaires pour des piles à combustible par moulage sous pression d'un mélange comprenant de 5 à 95% en masse de poudre de graphite, de 5 à 50% en masse de liant organique et jusqu'à 20% en masse de fibres conductrices. La poudre de graphite présente une granulométrie comprise entre 0,1 et 200 µm, de préférence entre 23 et 26 µm.

### Exposé de l'invention

La présente invention a été conçue pour remédie aux inconvénients cités ci-dessus. Elle permet :
- la fabrication d'électrodes pour pile à combustible comprenant des canaux d'alimentation en gaz sans étape d'usinage ;
- l'obtention, de conductivités élevées, en particulier en surface ;
- l'obtention, de niveaux de perméabilité aux gaz hydrogène et oxygène très faibles, inférieurs à ceux à plaques de graphite obtenues par pyrolyse puis usinage ;
- l'obtention de propriétés mécaniques suffisantes pour permettre le montage et le fonctionnement de piles à combustible ;
- l'obtention des électrodes pour pile à combustible comprenant un matériau conducteur de faible poids.

Pour obtenir ces résultalts, des électrodes pour pile à combustible comprenant les matériaux composites conducteurs selon l'invention sont réalisés à partir de poudres de graphite spécifique, très anisotrope et imperméable aux gaz hydrogène et oxygène, assurant ainsi les conductivités électrique et thermique parallèlement à une surface des produits réalisés en ces matériaux. Cette surface assure aussi une imperméabilité aux gaz. Ces matériaux composites comprennent des fibres conductrices afin d'optimiser les propriétés mécaniques et la conductivité volumique. La formulation de ces matériaux est adaptée à une mise en oeuvre rapide par une technique de malaxage-compression. On peut ainsi réaliser des plaques bipolaires pour piles à combustible en quelques minutes.

On peut ainsi obtenir un matériau composite conducteur constitué d'un mélange malaxé et compressé, le mélange comprenant une poudre de graphite lamellaire, des fibres conductrices et. un liant organique, le mélange comprenant :
- de 40 à 90% en volume de poudre de graphite lamellaire comprenant un type de graphite lamellaire formé d'agglomérats de particules de graphite liées et superposées antre elles sans présence de liant organique de façon que leurs plans principaux soient parallèles entre eux, ces agglomérats présentant une anisotropie planaire et ayant entre 10 µm et 1 min de côté et entre 5 et 50 µm d'épaisseur,
- de 0 à 25% en volume de fibres conductrices,
- de 10 à 40% en volume d'un liant organique.

De préférence, les agglomérats du type de graphite lamellaire sont constituées de particules de 5 à 20 µm de côté et de 0,1 à 5 µm d'épaisseur.

La poudre de graphite lamellaire peut comprendre aussi un autre type de graphite lamellaire formé de lamelles de granulométrie comprise entre 10 et 100 µm. De préférence, l'autre type de graphite lamellaire, est constitué de lamelles de granulométrie comprise entre 20 µm et 50 µm.

De préférence encore, les fibres conductrices sont des fibres choisies parmi les fibres de carbone, les fibres d'acier inoxydable et les fibres de carbone nickelées. Leur longueur peut être comprise entre 1 et 4 mm.

Le liant organique peut être une matière thermoplastique, de préférence de type fluoré comme le PVDF.

Avantageusement, le mélange comprend de 70 à 85% en volume de poudre de graphite, de 0 à 10% de fibres conductrices et de 10 à 25% de PVDF.

Le procédé de fabrication de ce matériau composite conducteur comprend :
- l'obtention d'un mélange comprenant de 10 à 40% en volume d'un liant organique sous forme de poudre ou de granulés, de 40 à 90% en volume d'une poudre de graphite lamellaire comprenant un type de graphite lamellaire constitué d'agglomérats de particules de graphite liées et superposées entre elles sans présence de liant organique de façon que leurs plans principaux soient parallèles entre eux, ces agglomérats présentant une anisotropie planaire et ayant entre 10 µm et 1 mm de côté et 5 et 50 µm d'épaisseur, et jusqu'à 25% en volume de fibres conductrices d'une longueur comprise entre 0,5 et 10 mm,
- le malaxage ou l'extrusion du mélange obtenu à une température supérieure à la température de fusion du liant organique et permettant d'obtenir une pâte à partir dudit mélange,
- le transfert de la pâte dans un moule porté à une température inférieure à la température de fusion du liant organique,
- la compression de la pâte contenue dans le moule pour obtenir ledit matériau composite conducteur.

Dans le cas où l'on procède à l'extrusion du mélange, la température dans à zone d'alimentation doit être optimisée pour éviter tout risque de colmatage.

Le transfert de la pâte dans le moule s'effectue préférentiellement par extrusion.

La compression de la pâte contenue dans le moule peut s'effectuer par une méthode choisie parmi la compression uniaxiale, l'extrusion/transfert, l'extrusion/compression, l'injection et l'injection/compression. L'extrusion/transfert est une méthode de moulage de type compression uniaxiale, la matière étant transférée dans le moule par extrusion. Le moule peut être froid ou à une température située au-dessus de la température de fusion du liant organique suivant la cadence de production et les propriétés souhaitées. Pour l'extrusion/compression, il s'agit de mélanger les poudres dans une extrudeuse et de transférer la matière fondue dans le moule, toujours par extrusion. Le moule est refermé et la matière est compressée à raison de 1 à 4 tonnes/cm² comme pour le pressage uniaxial. Pour l'injection/compression, il s'agit, après extrusion du mélange, d'injecter la matière fondue dans un moule semi-ouvert. Le moule est ensuite refermé, ce qui compresse la matière. Cette technique est préférable à l'injection classique car le moule n'étant pas fermé au départ, la pression nécessaire à l'injection est moindre, surtout pour des mélanges très chargés.

Le type de graphite lamellaire peut être obtenu par broyage, en phase solide ou en phase solvant, suivi d'un tamisage, de feuilles de graphite, une dite feuille de graphite étant constituée de particules de graphite dont les plans principaux sont parallèles au plan de ladite feuille. Ce broyage de feuilles de graphite peut consister à broyer des feuilles de graphite fabriquées par calandrage et/ou laminage de graphite naturel ou expansé.

Le type de graphite lamellaire peut aussi être obtenu par broyage, en phase solide ou liquide, d'une masse de graphite obtenue par compression, le broyage étant suivi d'un tamisage.

Le type de graphite lamellaire peut encore être obtenu au moyen des étapes suivantes :
- dispersion de plaquettes de graphite exfoliées ou obtenues par broyage de feuille de graphite dans un solvant organique jusqu'à obtenir une pâte homogène,
- séchage de la pâte homogène obtenue,
- concassage de la pâte séchée pour obtenir des agglomérats de particules de graphite,
- tamisage des agglomérats de particules de graphite.

L'étape de séchage peut être réalisée par filtration du solvant suivie d'un dégazage dans une enceinte sous vide.

La poudre de graphite lamellaire peut comprendre aussi un autre type de graphite lamellaire formé de lamelles de granulométrie comprise entre 10 et 100 µm.

Le malaxage peut être réalisé dans une extrudeuse ou dans un malaxeur à mélanges interne de type Bambury.

De préférence, le malaxage ou l'extrusion du mélange est effectué à une température comprise entre la température de fusion du liant organique et une température supérieure de 100°C à ladite température de fusion.

Dans le cas de l'extrusion d'un mélange de poudres conductrices (graphite, fibres) et thermoplastique, le profil de température de la vis est du fourreau est optimisé afin d'éviter le colmatage de la poudre thermoplastique à l'entrée de la zone d'alimentation de l'extrudeuse.

Le transfert de la pâte se fait dans un moule porté à une température comprise entre 20°C et 70°C. Ce transfert s'effectue de préférence par extrusion.

La compression de la pâte est effectuée avec une pression de 0,5 à 5 tonnes/cm². La durée de la compression est comprise entre 1 minute et 10 minutes. Ce type de moulage est similaire à l'extrusion/transfert.

Un objet de l'invention est constitué par une électrode pour pile a combustible, comprenant des moyens permettant la circulation d'un fluide gazeux à la surface d'au moins l'une de ses faces principales, caractérisée en ce qu'elle est en matériau composite conducteur constitué d'un mélange malaxé et compressé, le mélange comprenant :
- de 40 à 90% en volume d'une poudre de graphite comprenant un type de graphite lamellaire formé d'agglomérats de particule de graphite liées et superposées entre elles sans présence de liant organique de façon que leurs plans principaux soient parallèles entre eux, ces agglomérats présentant une anisotropie planaire et ayant entre 10 µm et 1 mm de côté, avec une majorité d'agglomérats entre 100 et 300 µm de côté, et entre 5 et 50 µm d'épaisseur,
- de 0 à 25% en volume de fibres conductrices,
- de 10 à 40% en volume d'un liant organique,
les agglomérats ayant suite à la compression uniaxiale du mélange melaxé sous une pression comprise entre 0,5-5 tonnes/cm² pendant une durée entre 1 et 10 minutes et à une température du moule entre 20°C et 70°C, leurs plans principaux parallèles entre eux et parallèles aux faces principales de l'électrode.

Un autre objet de l'invention concerne un procédé de fabrication d'une électrode pour pile à combustible comprenant des moyens permettant la circulation d'un fluide gazeux à la surface d'au moins l'une de ses faces principales, caractérisé en ce qu'il comprend :
- l'obtention d'un mélange comprenant de 10 à 40% en volume d'un liant organique sous forme de poudre ou de granulés, de 40 à 90% en volume de graphite lamellaire comprenant un type de graphite lamellaire constitué d'agglomérats de particules de graphite liées et superposées entre elles sans présence de liant organique de façon que leurs plans principaux soient parallèles entre eux, ces agglomérats présentant une anisotropie planaire et ayant entre 10 µm et 1 mm de côté et entre 5 et 50 µm d'épaisseur, et jusqu'à 25% en volume de libres conductrices d'une longueur comprise entre 0,5 et 10 mm,
- le malaxage ou l'extrusion du .mélange, obtenu à une température supérieure à la température de fusion du liant organique et permettant d'obtenir une pâte à partir dudit mélange,
- le transfert de la pâte dans un moule conçu pour reproduire lesdits moyens permettant la circulation d'un fluide gazeux, le moule étant porté à une température inférieure à la température de fusion du liant organique,
- la compression de la pâte contenue dans le moule pour obtenir ladite électrode, la compression provoquant l'orientation des agglomérats de sorte que leurs plans principaux soient parallèles entre eux et parallèles aux faces principales de l'électrode.

La compression de la pâte contenue dans le moule peut s'effectuer par une méthode choisie parmi la compression uniaxiale, l'extrusion/transfert, l'extrusion/compression, l'infection et l'injection/compression.

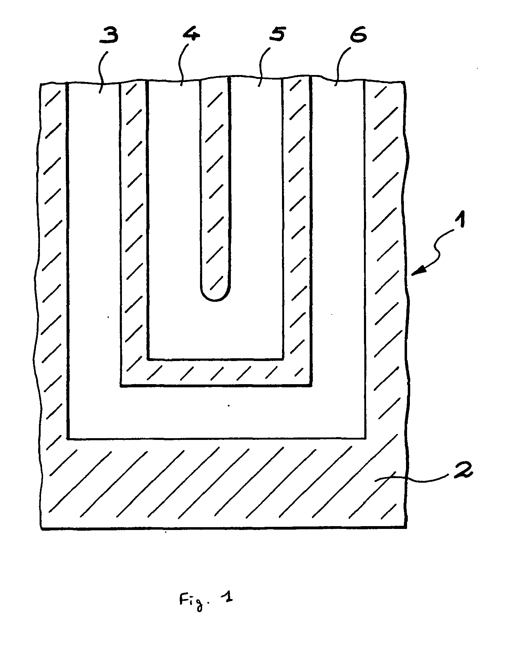

### Brève description du dessin

L'invention sera mieux comprise et d'autres avantages et particularités apparaîtront à la lecture de la description qui va suivre, donnée à titre d'exemple non limitatif, accompagnée de la figure annexée qui représente une vue partielle de l'une des faces principales d'une électrode pour pile à combustible selon la présente invention.

### Description détaillée d'un mode de réalisation de l'invention

La suite de la description portera sur la réalisation d'une électrode pour pile à combustible à partir d'un mélange comprenant un premier type de graphite lamellaire et un deuxième type de graphite lamellaire.

Le premier type de graphite possède une granulométrie comprise entre 10 et 100 µm. De préférence, la granulométrie moyenne est de 23 µm. Sa surface spécifique est comprise entre 6 et 25 m²/g et sa conductivité est de l'ordre de 1000 S/cm. On peut se procurer ce type de graphite dans le commerce.

Le deuxième type de graphite peut être constitué de particules provenant de feuilles de graphite préalablement réalisées par calandrage de graphite expansé. La densité de feuilles est de 1,1. La perméabilité à l'hélium de telles feuilles est de 10⁵ cm²/s/atm. Les feuilles de graphite sont broyées dans un solvant pour obtenir des agglomérats de lamelles de graphite, ces agglomérats ayant entre 10 µm et 1 mm de côté, avec une majorité d'agglomérats entre 100 et 300 µm de côté, et entre 5 et 50 µm d'épaisseur.

Le deuxième type de graphite peut aussi être obtenu à partir de plaquettes de graphite exfoliées dispersées dans un solvant organique. Le taux de graphite dans le solvant est compris entre 10 et 50% en volume suivant les caractéristiques dimensionnelles du graphite (faible taux de dilution pour les graphites de grande surface spécifique, à fort taux pour les plaquettes de quelques m²/g de surface spécifique) afin d'obtenir une pâte de faible viscosité. Ce mélange est agité jusqu'à obtention d'une dispersion homogène. La pâte est ensuite séchée par filtration du solvant puis par dégazage dans une enceinte sous vide. Ces opérations peuvent avantageusement permettre de récupérer le solvant. La pâte sèche obtenue est constituée de gros agglomérats de plaquettes de graphite, les plaquettes étant en majorité superposées. Dans un agglomérat, les plaquettes sont superposées, accolées et leurs plans principaux sont en majorité parallèles. Cette pâte est ensuite concassée et tamisée afin d'obtenir des agglomérats de graphite de granulométrie comprise entre 100 µm et 1 mm.

Le deuxième type de graphite peut encore être obtenu en broyant des matériaux graphitiques solides. Le broyage s'effectue en phase solide ou liquide. La poudre obtenue est tamisée à la granulométrie spécifiée pour le deuxième type de graphite. Il est préférable d'utiliser comme matière première des masses de graphite réalisées par compression afin de disposer d'une structure de départ anisotrope.

Afin d'augmenter significativement les propriétés mécaniques et de conductivité volumique, il peut être nécessaire d'incorporer des fibres conductrices dans le matériau de l'électrode. Ces fibres conductrices peuvent être des fibres de carbone, des fibres d'acier inoxydable ou des fibres de carbone nickelées. La longueur des fibres conductrices peut être comprise entre 0,5 et 10 mm. Des fibres d'une longueur comprise entre 1 et 4 mm sont préférentiellement utilisées. On peut ainsi coupler les performances en conductivité des matériaux chargés en fibres conductrices et ceux chargés en poudre de graphite.

Les matériaux composites uniquement chargés en fibres conductrices peuvent atteindre des niveaux de conductivité en volume suffisants mais la résistance de surface reste élevée. Celle-ci est encore augmentée par la formation d'une couche isolante de polymère à la surface du matériau, induite par le faible taux de fibres incorporable dans le matériau composite. A l'opposé, des matériaux fortement chargés en graphite lamellaire, obtenus par thermo-compression, présentent des résistances de surface très faibles mais une conductivité en volume limitée. La conductivité est dans ce cas très anisotrope, voire trop anisotrope. Selon l'invention, le mélange de fibres conductrices et de graphite lamellaire permet d'optimiser les niveaux de conductivité. Toutefois, les mélanges sans fibres peuvent se révéler intéressants pour diminuer les coûts.

Les liants organiques utilisés pour assurer la cohésion du matériau composite sont principalement du type thermoplastique. Afin de satisfaire aux contraintes environnementales dans une pile à combustible de type PEMFC (Polymer Electrolyte Membrane Fuel Cell) ou DMFC (Direct Methanol Fuel Cell), les thermoplastiques de type fluorés, par exemple le PVDF ou poly (fluorure de vinylidène), sont préférés. Toutefois, en fonction des propriétés mécaniques et de tenue chimique exigées, ainsi que du coût accepté, il est possible d'utiliser tout type de thermoplastique ou de thermodurcissable sous forme de granulés, de poudre ou de liquide visqueux, dont les niveaux de viscosité à chaud à l'état "ramolli" et les durées de vie (dans le cas des thermodurcissables) permettent une mise en oeuvre par la technique de "malaxage-compression".

Afin d'optimiser les performances en conductivité tout en garantissant une mise en oeuvre acceptable, les gammes de taux de charge préférentielles sont les suivantes :
- De 40 à 90% en volume de poudre de graphite. Cette poudre est constituée d'un mélange de poudre G1 (premier type de graphite) et de poudre G2 (deuxième type de graphite). Le rapport G2/G1 est d'autant plus élevé que l'on souhaite améliorer l'imperméabilité aux gaz hydrogène et oxygène.
- Jusqu'à 25% en volume de fibres conductrices. Le taux de fibres est d'autant plus élevé que l'on souhaite atteindre des niveaux de conductivité importants en volume. Le coût des fibres ainsi que la difficulté d'incorporer plus de 30% en volume de fibres limitent ce taux de charge.
- De 10 à 40% en volume de résine thermoplastique.

Préférentiellement, on peut utiliser des formulations volumiques dans la gamme suivante : 70 à 85% de graphite, 0 à 10% de fibres et 10 à 25% de PVDF.

Le malaxage peut être réalisé dans une extrudeuse bi-vis ou mono-vis, ou dans un malaxeur à mélange interne de type Bambury. L'utilisation d'une extrudeuse est mieux adaptée pour une production en continu. La température du malaxeur est comprise entre la température de fusion du liant sélectionné et une température supérieure de 100°C à cette température de fusion. Ceci permet d'une part d'abaisser la viscosité du polymère fondu et ainsi de faciliter l'introduction des charges et, d'autre part, de conserver une température du mélange supérieure à la température de fusion pour amorcer la deuxième phase du procédé, c'est-à-dire la compression. Dans le cas d'un malaxage par extrusion, les températures le long de la vis sont optimisées afin d'éviter le colmatage de la zone d'alimentation par la poudre thermoplastique fondue. A la fin de la phase de malaxage, le mélange est une pâte dont le liant polymère est à l'état fondu, nécessitant une phase de compression afin, d'une part, d'être moulée sous forme de plaque bipolaire par exemple et, d'autre part, de lui conférer les propriétés de conductivités électrique et thermique anisotropes recherchées.

Le mélange chargé, encore à l'état fondu, est transféré du malaxeur vers un moule froid pour y subir une compression uniaxiale. Il est avantageux d'effectuer le transfert de la matière fondue vers le moule par extrusion. On réduit ainsi les pertes calorifiques lors du transfert. Cette opération peut avantageusement être couplée à l'opération précédente de malaxage par extrusion. On parle alors d'extrusion/transfert. Le moule est constitué d'une base et d'un piston à la surface desquels sont usinés en négatif les canaux d'alimentation en gaz. La température du moule est comprise entre 20°C et la température de fusion du polymère. Plus la température est basse et plus le démoulage est rapide et aisé, ce qui permet d'accélérer la cadence de production. Par contre, un moule chaud favorise une résistance de surface faible. Dans le cas d'une électrode pour pile à combustible, la température du moule est comprise entre 20°C et 70°C, c'est-à-dire nettement inférieure à la température de fusion du polymère.

La compression du mélange est effectuée sous une pression comprise entre 0, 5, et 5 tonnes/cm² et pendant une durée comprise entre 1 et 10 minutes, selon les propriétés mécaniques et de porosité souhaitées.

Cette étape de moulage par compression peut avantageusement être effectuée soit par injection classique (opération difficile à cause de la viscosité de la matière fondue), soit préférentiellement par injection/compression dans un moule dit semi-ouvert. Dans ce cas, la matière est injectée dans le moule ouvert, ce qui ne nécessite pas de pression aussi élevée que dans un moule fermé, le moule étant ensuite refermé par la presse.

La figure annexée montre, de façon partielle, l'une des faces principales d'une électrode pour pile à combustible selon la présente invention. La face principale 2 de l'électrode (ou plaque bipolaire) 1 comporte des cannelures 3, 4, 5 et 6 reliées entre elles de façon à permettre la circulation d'un fluide gazeux sur la face 2 de l'électrode.

Les matériaux selon l'invention, à base de graphite G1 (premier type de graphite lamellaire), de graphite G2 (deuxième type de graphite lamellaire) et de fibres conductrices, obtenus par la technique rapide de "malaxage-compression" se distinguent des matériaux de l'état de l'art par une structure stratifiée très anisotrope. Cette structure présente les avantages suivants.

Dans le cas d'une plaque bipolaire, la conductivité parallèlement aux faces principales de la plaque est très supérieure à la conductivité perpendiculairement à la plaque. Cette propriété est une conséquence de la structure en strates du matériau de la plaque. Par exemple, pour des matériaux chargés de 40 à 70% en volume de graphite G1 et/ou G2 et de 5 à 25% en volume de fibres conductrices, la conductivité transversale obtenue varie entre 1 et 30 S/cm tandis que la conductivité longitudinale obtenue varie entre 50 et 200 S/cm.

Cette caractéristique permet de disposer d'une résistance de contact en surface très faible pour les plaques bipolaires. La plaque bipolaire obtenue directement par moulage, selon l'invention, peut assurer le contact électrique entre les différents composants adjacents d'une pile à combustible sans traitement de surface supplémentaire. De plus, la conductivité thermique importante dans les directions parallèles à la surface des plaques permet l'évacuation des calories vers l'extérieur de la cellule. Cette propriété permet d'optimiser le refroidissement de la cellule électrochimique.

Dans une structure PEMFC ou DMFC, les plaques collectrices de courant ont aussi pour fonction de séparer les gaz hydrogène et oxygène (ou l'air) circulant dans les canaux d'alimentation réalisés sur chacune des surfaces de la plaque dans l'option d'une plaque bipolaire. Dans le cas de la présente invention, l'étanchéité de la plaque à ces deux gaz est assurée par la nature chimique des composés (graphite et liant thermoplastique notamment) ainsi que par la structure stratifiée du matériau, sans traitement supplémentaire ni insertion de matériau barrière. L'utilisation de graphite G2 permet ainsi d'atteindre des niveaux de perméabilité à l'hydrogène 40 fois plus faibles que ceux de plaques de graphite phénolique pyrolysé usinées. Les formulations à base uniquement de graphite commercial G1 présentent des perméabilités au moins trente fois supérieures.

Parmi les avantages procurés par la présente invention vis-à-vis de l'art antérieur, on peut citer la porosité et les propriétés mécaniques. Le malaxage du polymère et sa compression à l'état fondu facilitent le remplissage des porosités dans le mélange. Cette propriété permet d'une part d'améliorer l'imperméabilité aux gaz et, d'autre part, de renforcer les propriétés mécaniques par une meilleure cohésion entre les charges et le liant. La présence de fibres conductrices dans les formulations permet aussi d'optimiser les propriétés mécaniques ainsi que la conductivité volumique.

Le liant organique est mélangé avec les charges graphitiques et fibrillaires à l'état fondu. La pâte obtenue possède une densité supérieure à 1,5 g/cm³ et est exempte de poussière de liant et de graphite. Ce conditionnement facilite les opérations de transfert dans le moule.

Le moule peut être utilisé froid, ce qui favorise le démoulage et évite les opérations de chauffage et de refroidissement du moule. La durée du moulage est très courte : de 1 à 10 minutes.

Par rapport aux procédés classiques d'extrusion ou d'injection, le procédé de l'invention présente les avantages suivants. La possibilité de mouler par compression (c'est-à-dire soit par moulage/compression, soit par extrusion/transfert ou extrusion/compression, soit par injection/compression) permet de formuler des matériaux à des taux de charge supérieurs à 50% en volume de matière conductrice (graphite et fibres) et en particulier à près de 85% en volume. De tels mélanges ne seraient pas transformables par injection à cause de leur viscosité trop élevée.

Le procédé selon l'invention ne génère pas de contrainte dans le mélange lors du transfert dans le moule. Dans le cas de l'injection classique, la résine se répand d'abord sur les parois du moule en début d'injection par un effet d'essorage partiel des charges dû aux importantes contraintes nécessaires pour transférer le mélange très visqueux dans le moule. Cette fine couche de résine induit une résistance de contact en surface des plaques injectées. La technique de "malaxage-compression" (par extrusion/transfert, extrusion/compression ou injection/compression), adaptée à des formulations très chargées, évite la formation d'un film isolant en surface des plaques et permet leur utilisation à l'état brut de démoulage.

## Revendications

1. Electrode (1) pour pile à combustible, comprenant des moyens (3,4,5,6) permettant la circulation d'un fluide gazeux à surfaces d'au moins l'une (2) de ses faces principales, l'électrode étant en matériau composite conducteur constitué d'un mélange malaxé et compressé, le mélange malaxé comprenant :
- de 40 à 90% en volume d'une poudre de graphite comprenant un type de graphite lamellaire formé d'agglomérats de particules de graphite liées et superposées entre elles sans présence de liant organique de façon que, dans les agglomérats, les plans principaux soient parallèles entre eux, ces agglomérats présentant une anisotropie planaire et ayant entre 10 µm et 1 mm de côté, avec une majorité d'agglomérats entre 100 et 300 µm de côté, et entre 5 et 50 µm d'épaisseur,
- de 0 à 25% en volume de fibres conductrices,
- de 10 à 40% en volume d'un liant organique,
les agglomérats ayant suite à la compression uniaxiale du mélange malaxé sous une pression comprise entre 0.5 et 5 tonnes/cm², pendant une durée comprise entre 1 et 10 minutes et à une température du moule comprise entre 20°C et 70°C, leurs plans principaux parallèles entre eux et parallèles aux faces principales de l'électrode.

2. Electrode (1) pour pile à combustible selon la revendications 1, **caractérisée en ce que** la poudre de graphite comprend également un autre type de graphite lamellaire formé de lamelles de granulométrie comprise entre 10 et 100 µm.

3. Electrode (1) pour pile à combustible selon la revendication 2, **caractérisée** an ce que l'autre type de graphite lamellaire est constituée de lamelles de granulométrie comprise entre 20 et 50 µm.

4. Electrode (1) pour pile à combustible selon l'une quelconque des revendications 1 à 3, **caractérisée en ce que** les agglomérats du type de graphite lamellaire sont constitués de particules de 5 à 20 µm de côté et de 0,1 à 5 µm d'épaisseur.

5. Electrode (1) pour pile à combustible selon l'une quelconque des revendications 1 à 4, **caractérisée en ce que** les fibres conductrices sont des fibres choisies parmi les fibres de carbone, les fibres d'acier inoxydable et les fibres de carbone nickelées.

6. Electrode (1) pour pile à combustible selon l'une quelconque des revendications 1 à 5, **caractérisée en ce que** les fibres conductrices ont une longueur comprise entre 1 et 4 mm.

7. électrode (1) pour pile à combustible selon l'une quelconque des revendications 1 à 6, **caractérisée en ce que** le liant organique est une matière thermoplastique.

8. Electrode (1) pour pile à combustible selon la revendication 7, **caractérisée en ce que** le liant organique est une matière thermoplastique de type fluoré.

9. Electrode (1) pour pile à combustible selon la revendication 8, **caractérisée en ce que** le liant organique est du FVDF.

10. électrode (1) pour pile à combustible selon la revendication 9, **caractérisée en ce que** le mélange comprend de 70 à 85% en volume de poudre de graphite, de 0 à 10% en volume de fibres conductrices et de 10 à 25% en volume de PVDF.

11. Procédé de fabrication d'une électrode (1) pour pile à combustible comprenant des moyens (3,4,5,6) permettant la circulation d'un fluide gazeux à la surface d'au moins l'une (2) de ses faces principales, comprenant :
- l'obtention d'un mélange comprenant de 10 à 40% en volume d'un liant organique sous forme de poudre ou de granulés, de 40 à 90% en volume de graphite lamellaire comprenant un type de graphite lamellaire constitué d'agglomérats de particules de graphite liées et superposées entre elles sans présence d'un liant organique de façon que, dans les agglomérats, les plans principaux soient parallèles entre eux, ces agglomérats présentant une anisotropie planaire et ayant entre 10 µm et 1 mm de côté, avec une majorité d'agglomérats entre 100 et 300 µm de côté, et entre 5 et 50 µm d'épaisseur, et jusqu'à 25% en volume de fibres conductrices d'une longueur comprise entre 0,5 et 10 mm,
- le malaxage ou l'extrusion du mélange obtenu à une température supérieure à la température de fusion du liant organique et permettant d'obtenir une pâte à partir dudit mélange,
- le transfert de la pâte dans un moule conçu pour reproduire lesdits moyens permettant la circulation d'un fluide gazeux, le moule étant porté à une température inférieure à la température de fusion du liant organique,
- la compression uniaxiale de la pâte contenue dans le moule pour obtenir ladite électrode, sous une pression comprise entre 0,5 et 5 tonnes/cm², pendant une durée comprise entre 1 et 10 minutes et à une température du moule comprise entre 20°C et 70°C, la compression provoquant l'orientation des agglomérats de sorte que leurs plans principaux soient parallèles entre eux et parallèles aux faces principales de l'électrode.

12. Procédé de fabrication d'une électrode (1) pour pile à combustible selon la revendication 11, **caractérise en ce que** le graphite comprend également un autre type de graphite lamellaire constitué de lamelles de granulométrie comprise entre 10 et 100 µm.

13. Procédé de fabrication d'une électrode (1) pour pile à combustible selon la revendication. 11, **caractérisée en ce que** la compression de la pâte contenue dans le moule s'effectue par une méthode choisie parmi la compression uniaxiale, l'extrusion/transfert, l'extrusion compression, l'injection et l'injection/compression.

14. Procédé de fabrication d'une électrode (1) Pour pile à combustible melon l'une quelconque des revendications 11 à 13, **caractérisée en ce que** le type de graphite lamellaire constitué d'agglomérats est obtenu par broyage, en phase solide ou en phase solvant, suivi d'un tamisage, de feuilles de graphite, une dite feuille de graphite étant constituée de particules de graphite dont les plans principaux sont parallèles au plan de ladite feuille.

15. Procédé de fabrication d'une électrode (1) pour pile à combustible selon la revendication 14, **caractérisé en ce que** le broyage de feuilles de graphite consiste à broyer des feuilles de graphite fabriquées par calandrage et/ou laminage de graphite naturel ou expansé.

16. Procédé de fabrication d'une électrode (1) pour pile à combustible selon l'une quelconque des revendications 11 à 13, **caractérisé en ce que** le type de graphite lamellaire constitué d'agglomérats est obtenu par broyage, en phase solide ou liquide, d'une masse de graphite obtenue par compression, le broyage étant suivi d'un tamisage.

17. Procédé de fabrication d'une électrode (1) pour pile à combustible selon l'une quelconque des revendications 11 à 13, **caractérisé en ce que** le type de graphite lamellaire constitué d'agglomérats est obtenu au moyen des étapes suivantes :
- dispersion de plaquettes de graphite exfoliées ou obtenues par broyage de feuille de graphite dans un solvant organique jusqu'à obtenir une pâte homogène,
- séchage de la pâte homogène obtenue,
- concassage de la pâte séchée pour obtenir des agglomérats de particules de graphite,
- tamisage des agglomérats de particules de graphite.

18. Procède de fabrication, d'une électrode (1) pour pile à combustible selon la revendication 17, **caractérisé en ce que** l'étape de séchage est réalisée par filtration du solvant suivie d'un dégazage dans une enceinte sous vide,

19. Procédé selon l'une quelconque des revendications 11 à 18, **caractérisé en ce que** le malaxage est réalisé dans une extrudeuse.

20. Procédé selon l'une quelconque des revendications 11 à 18, **caractérisé en ce que** le malaxage est réalisé dans un malaxeur à mélange interne de type Bambury.

21. Procédé selon l'une quelconque des revendications 11 à 20, **caractérisé en ce que** le malaxage au l'extrusion du mélanges est effectué à une température comprise entre la température de fusion du liant organique et une température supérieure de 100°C à ladite température de fusion.

## Claims

1. An electrode (1) for a fuel cell, comprising means (3,4,5,6) allowing circulation of a gas fluid at the surface of at least one (2) of its main faces, the electrode being in a conductive composite material consisting of a kneaded and compressed mixture, the kneaded mixture comprising:
- from 40 to 90% by volume of a graphite powder comprising a type of lamellar graphite formed with a agglomerates of graphite particles bound and superposed together without the presence of any organic binder so that, in the agglomerates, the main planes are parallel with each other, these agglomerates having planar anisotropy and having a side between 10 µm and 1 mm, with a majority of agglomerates with a side between 100 and 300 µm, and with thickness between 5 and 50 µm,
- from 0 to 25% by volume of conductive fibers,
- from 10 to 40% by volume of an organic binder, the agglomerates following uniaxial compression of the kneaded mixture under a pressure comprised between 0.5 and 5 metric tons/cm², for a duration comprised between 1 and 10 minutes and at a temperature of the mold comprised between 20°C and 70°C, having their main planes parallel with each other and parallel to the main faces of the electrodes.

2. The fuel cell electrode (1) according to claim 1, **characterized in that** the graphite powder also comprises another type of lamellar graphite formed with lamellae having a grain size comprised between 10 and 100 µm.

3. The fuel cell electrode (1) according to claim 2, **characterized in that** the other type of lamellar graphite consists of lamellae with a grain size comprised between 20 and 50 µm.

4. The fuel cell electrode (1) according to any of claims 1 to 3, **characterized in that** the agglomerates of the lamellar graphite type consist of particles with a side from 5 to 20 µm and a thickness from 0.1 to 5 µm.

5. The fuel cell electrode (1) according to any of claims 1 to 4, **characterized in that** the conductive fibers are fibers selected from carbon fibers, stainless steel fibers and nickel-plated carbon fibers.

6. The fuel cell electrode (1) according to any of claims 1 to 5, **characterized in that** the conductive fibers have a length comprised between 1 and 4 mm.

7. The fuel cell electrode (1) according to any of claims 1 to 6, **characterized in that** the organic binder is a thermoplastic material.

8. The fuel cell electrode (1) according to claim 7, **characterized in that** the organic binder is a thermoplastic material of the fluorinated type.

9. The fuel cell electrode (1) according to claim 8, **characterized in that** the organic binder is PVDF.

10. The fuel cell electrode (1) according to claim 9, **characterized in that** the mixture comprises from 70 to 85% by volume of graphite powder, from 0 to 10% by volume of conductive fibers and from 10 to 25% by volume of PVDF.

11. A method for manufacturing a fuel cell electrode (1) comprising means (3,4,5,6) allowing circulation of a gas fluid at the surface of at least one (2) of its main faces, comprising:
- obtaining a mixture comprising from 10 to 40% by volume of an organic binder as a powder or granules, from 40 to 90% by volume of lamellar graphite comprising a type of lamellar graphite consisting of agglomerates of graphite particles bound and superposed together without a presence of an organic binder so that, in the agglomerates, the main planes are parallel with each other, these agglomerates having planar anisotropy and having a side between 10 µm and 1 mm, with a majority of agglomerates with a side between 100 and 300 µm, and a thickness between 5 and 50 µm, and up to 25% by volume of conductive fibers with a length comprised between 0.5 and 10 mm,
- kneading or extruding the mixture obtained at a temperature above the melting temperature of the organic binder and with which a slurry may be obtained from said mixture,
- transferring the slurry into a mold designed for reproducing said means allowing circulation of a gas fluid, the mold being brought to a temperature below the melting temperature of the organic binder,
- uniaxial compression of the slurry contained in the mold in order to obtain said electrode, under a pressure comprised between 0.5 and 5 metric tons/cm², for a duration comprised between 1 and 10 minutes and at a temperature of the mold comprised between 20° and 70°C, the compression causing orientation of the agglomerates so that their main planes are parallel with each other and parallel with the main faces of the electrode.

12. The method for manufacturing a fuel cell electrode (1) according to claim 11, **characterized in that** the graphite also comprises another type of lamellar graphite consisting of lamellae with a grain size comprised between 10 and 100 µm.

13. The method for manufacturing a fuel cell electrode (1) according to claim 11, **characterized in that** the compression of the slurry contained in the mold is carried out with a method selected from uniaxial compression, extrusion/transfer, compression extrusion, injection and injection/compression.

14. The method for manufacturing a fuel cell electrode (1) according to any of claims 11 to 13, **characterized in that** the type of lamellar graphite consisting of agglomerates is obtained by milling, in a solid phase or in a solvent phase, followed by sifting, of graphite sheets, a so-called graphite sheet consisting of graphite particles, the main planes of which are parallel to the plane of said sheet.

15. The method for manufacturing a fuel cell electrode (1) according to claim 14, **characterized in that** the milling of the graphite sheets consists of milling the graphite sheets made by calendering and/or lamination of natural or expanded graphite.

16. The method for manufacturing a fuel cell electrode (1) according to any of claims 11 to 13, **characterized in that** the type of lamellar graphite consisting of agglomerates is obtained by milling, in a solid or liquid phase, of a graphite mass obtained by compression, the milling being followed by sifting.

17. The method for manufacturing a fuel cell electrode (1) according to any of claims 11 to 13, **characterized in that** the type of lamellar graphite consisting of agglomerates is obtained by means of the following steps:
- dispersing exfoliated graphite platelets or obtained by milling of graphite sheets in an organic solvent until a homogenous slurry is obtained,
- drying the obtained homogeneous slurry,
- crushing the dried slurry in order to obtain agglomerates of graphite particles,
- sifting the agglomerates of graphite particles.

18. The method for manufacturing a fuel cell electrode (1) according to claim 17, **characterized in that** the drying step is achieved by filtration of the solvent followed by degassing in a vacuum chamber.

19. The method according to any of claims 11 to 18, **characterized in that** the kneading is achieved in an extruder.

20. The method according to any of claims 11 to 18, **characterized in that** the kneading is achieved in a kneader of the Bambury type with internal mixing.

21. The method according to any of claims 11 to 20, **characterized in that** kneading or extruding the mixture is carried out at a temperature comprised between the melting temperature of the organic binder and a temperature greater than said melting temperature by 100°C.

## Patentansprüche

1. Elektrode (1) für Brennstoffzelle, die Einrichtungen (3, 4, 5, 6) aufweist, die das Zirkulieren eines gasförmigen Fluids auf der Oberfläche mindestens einer (2) ihrer Hauptseiten ermöglicht, wobei die Elektrode aus einem leitenden Verbundmaterial besteht, das durch ein geknetetes und komprimiertes Gemisch gebildet ist, wobei das geknetete Gemisch aufweist:
- 40 bis 90 Vol.-°/u an Graphitpulver, das einen Typ von lamellenartige Graphit enthält, der durch Agglomerate von Graphitpartikeln gebildet ist, die miteinander verbunden und überlagert sind, und zwar ohne Vorhandensein eines organischen Bindemittels, derart, dass in den Agglomeraten die Hauptebenen zueinander parallel sind, wobei diese Agglomerate eine planare Anisotropie aufweisen und eine Seitenlänge zwischen 10 µm und 1 mm haben, wobei eine Mehrheit der Agglomerate eine Seitenlänge zwischen 10 und 300 µm hat, und eine Dicke zwischen 5 und 50 µm haben,
- 0 bis 25 Vol.-% an leitenden Fasern,
- 10 bis 40 Vol.-% eines organischen Bindemittels,
wobei die Agglomerate eine Folge des einachsigen Komprimierens des gekneteten Gemisches sind, und zwar unter einem Druck zwischen 0,5 und 5 Tonnen/cm², während einer Dauer zwischen 1 und 10 Minuten und einer Temperatur der Pressform zwischen 20°C und 70°C, wobei ihre Hauptebenen zueinander parallel und parallel zu den Hauptflächen der Elektroden sind.

2. Elektrode (1) für Brennstoffzelle nach Anspruch 1, **dadurch gekennzeichnet, dass** das Graphitpulver auch einen weiteren Typ von lamellenartigen Graphit aufweist, der aus Lamellen einer Korngröße zwischen 10 und 100 µm gebildet ist.

3. Elektrode (1) für Brennstoffzelle nach Anspruch 2, **dadurch gekennzeichnet, dass** der weitere Typ von lamellenartigem Graphit aus Lamellen einer Korngröße zwischen 20 und 50 µm gebildet ist.

4. Elektrode (1) für Brennstoffzelle nach einem der Ansprüche 1 bis 3, **dadurch gekennzeichnet, dass** die Agglomerate des Typs von lamellenartige Graphit aus Partikeln einer Seitenlänge von 5 bis 20 µm und einer Dicke von 0,1 bis 5 µm gebildet sind.

5. Elektrode (1) für Brennstoffzelle nach Ansprüche 1 bis 4, **dadurch gekennzeichnet, dass** es sich bei den leitenden Fasern um Fasern handelt, die aus Kohlefasern, Fasern aus rostfreiem Stahl und vernickelten Kohlefasern gewählt sind.

6. Elektrode (1) für Brennstoffzelle nach einem der Ansprüche 1 bis 5, **dadurch gekennzeichnet, dass** die leitenden Fasern eine Länge zwischen 1 und 4 mm haben.

7. Elektrode (1) für Brennstoffzelle nach einem der Ansprüche 1 bis 6, **dadurch gekennzeichnet, dass** das organische Bindemittel ein thermoplastisches Material ist.

8. Elektrode (1) für Brennstoffzelle nach Anspruch 7, **dadurch gekennzeichnet, dass** das organische Bindemittel ein thermoplastisches Material vom fluorierten Typ ist.

9. Elektrode (1) für Brennstoffzelle nach Anspruch 8, **dadurch gekennzeichnet, dass** das organische Bindemittel PVDF ist.

10. Elektrode (1) für Brennstoffzelle nach Anspruch 9, **dadurch gekennzeichnet, dass** das Gemisch 70 bis 85 Vol.-% an Graphitpulver, 0 bis 10 Vol.-% an leitenden Fasern und 10 bis 25 Vol.-% an PVDF enthält.

11. Verfahren zur Herstellung einer Elektrode (1) für eine Brennstoffzelle, die Einrichtungen (3, 4, 5, 6) aufweist, welche das Zirkulieren eines gasförmigen Fluids auf der Oberfläche mindestens einer (2) ihrer Hauptflächen ermöglicht, umfassend:
- Erzielen eines Gemisch, enthaltend 10 bis 40 Vol.-% eines organischen Bindemittels in Form von Pulver oder Granulat, 40 bis 90 Vol.-% an lamellenartigem Graphit, das einen Typ von lamellenartigem Graphit enthält, der durch Agglomerate von Graphitpartikeln gebildet ist, die miteinander verbunden und überlagert sind, und zwar ohne Vorhandensein eines organischen Bindemittels, derart, dass in den Agglomeraten die Hauptebenen zueinander parallel sind, wobei diese Agglomerate eine planare Anisotropie aufweisen und eine Seitenlänge zwischen 10 µm und 1 mm haben, wobei eine Mehrheit der Agglomerate eine Seitenlänge zwischen 10 und 300 µm hat, und eine Dicke zwischen 5 und 50 µm haben, und bis zu 25 Vol.-% an leitenden Fasern von einer Länge zwischen 0,5 und 10 mm,
- Kneten oder Extrudieren des Gemisches, das bei einer Temperatur oberhalb der Schmelztemperatur des organischen Bindemittels erzielt wird, was ermöglicht, aus dem Gemisch eine Paste zu erzielen,
- Transferieren der Paste in eine Pressform, die dazu gedacht ist, die Einrichtungen zu reproduzieren, welche das Zirkulieren eines gasförmigen Fluids ermöglichen,
- wobei die Pressform auf eine Temperatur unterhalb der Schmelztemperatur des organischen Bindemittels gebracht wurde,
- einachsiges Komprimieren der in der Pressform enthaltenen Paste, um die Elektrode zu erzielen, und zwar unter einem Druck zwischen 0,5 und 5 Tonnen/cm², während einer Dauer zwischen 1 und 10 Minuten und bei einer Temperatur der Pressform zwischen 20°C und 70°C, wobei das Komprimieren eine Orientierung der Agglomerate hervorruft, derart, dass ihre Hauptebenen parallel zueinander und parallel zu den Hauptflächen der Elektrode sind.

12. Verfahren zur Herstellung einer Elektrode (1) für Brennstoffzelle nach Anspruch 11, **dadurch gekennzeichnet, dass** das Graphit auch einen weiteren Typ von lamellenartigem Graphit aufweist, der aus Lamellen einer Korngröße zwischen 10 und 100 µm besteht.

13. Verfahren zur Herstellung einer Elektrode (1) für Brennstoffzelle nach Anspruch 11, **dadurch gekennzeichnet, dass** das Komprimieren der in der Pressform enthaltenen Paste mittels eines Verfahrens bewerkstelligt wird, das ausgewählt ist zwischen: einachsigem Komprimieren, Extrudieren/Transfer, Extrudieren/Kompression, Einspritzen und Einspritzen/Komprimieren.

14. Verfahren zur Herstellung einer Elektrode (1) für Brennstoffzelle nach einem der Ansprüche 11 bis 13, **dadurch gekennzeichnet, dass** der Typ von lamellenartigem Graphit, das aus Agglomeraten besteht, durch Zerkleinern, in fester Phase oder in Lösungsmittelphase, gefolgt von einem Sieben, von Graphitblättern erzielt wird, wobei ein solches Graphitblatt aus Graphitpartikein besteht, deren Hauptebenen parallel zur Ebene dieses Blattes sind.

15. Verfahren zur Herstellung einer Elektrode (1) für Brennstoffzelle nach Anspruch 14, **dadurch gekennzeichnet, dass** das Zerkleinern von Graphitblättern darin besteht, Graphitblätter zu zerkleinern, die mittels Kalandrieren und/oder Walzen von natürlichem oder expandiertem Graphit hergestellt sind.

16. Verfahren zur Herstellung einer Elektrode (1) für Brennstoffzelle nach einem der Ansprüche 11 bis 13, **dadurch gekennzeichnet, dass** der Typ von aus Agglomeraten bestehendem lamellenartigem Graphit mittels Zerkleinern, in fester oder flüssiger Phase, einer durch Komprimieren erzielten Graphitmasse erzielt wird, wobei auf das Zerkleinern ein Sieben folgt.

17. Verfahren zur Verstellung einer Elektrode (1) für Brennstoffzelle nach einem der Ansprüche 11 bis 13, **dadurch gekennzeichnet, dass** der Typ von aus Agglomeraten bestehenden lamellenartigen Graphits mittels der folgenden Schritte erzielt wird:
- Dispergieren von Graphiplättchen, die durch Abschiefern oder mittels Zerkleinern eines Graphitblattes erhalten wurden, in einem organischen Lösungsmittel, bis eine homogene Paste erzielt wird,
- Trocknen der erhaltenen homogenen Paste,
- Zerkleinern der getrockneten Paste, um Agglomerate von Graphitpartikeln zu erzielen,
- Sieben der Graphitpartikelagglomerate.

18. Verfahren zur Herstellung einer Elektrode (1) für Brennstoffzelle nach Anspruch 17, **dadurch gekennzeichnet, dass** der Trocknungsschritt durch Filtrieren des Lösungsmittels, gefolgt von einem Entgasen in einer Vakuumkammer bewerkstelligt wird.

19. Verfahren nach einem der Ansprüche 11 bis 18, **dadurch gekennzeichnet, dass** das Kneten in einem Extruder bewerkstelligt wird.

20. Verfahren nach einem der Ansprüche 11 bis 18, **dadurch gekennzeichnet, dass** das Kneten in einem mit internem Mischen arbeitenden Knetgerät vom Typ Bambury bewerkstelligt wird.

21. Verfahren nach einem der Ansprüche 11 bis 20, **dadurch gekennzeichnet, dass** das Kneten oder das Extrudieren des Gemisches bei einer Temperatur durchgeführt wird, die zwischen der Schmelztemperatur des organischen Bindemittels und einer Temperatur um 100°C über dieser Schmelztemperatur liegt.
